# EUROPÄISCHE PATENTANMELDUNG

(11) **EP 1 236 427 A2**
(43) Veröffentlichungstag der Anmeldung: **04.09.2002**
(21) Anmeldenummer: 02002692.8
(22) Anmeldetag: 06.02.2002
(51) Int. Cl.: A47J 36/04

(54) **Ein Gefäss zum Erhitzen von Flüssigkeiten ohne Siedeverzug**

(30) Priorität: 15.02.2001 DE 10107498
(71) Anmelder: Schott Jenaer Glas GmbH, 07745 Jena (DE); Csonka es Fiai Kft, 9400 Sopron (HU)
(72) Erfinder: Rothe, Horst, 07778 Nerkewitz (DE); Csonka, Laszlo, 9400 Sopron (HU); Csonka, Zoltan, 9400 Sopron (HU)
(74) Vertreter: Dr. Weitzel & Partner

(57) **Zusammenfassung**

Die folgende Erfindung betrifft Ein Gefäß zum Erhitzen von Flüssigkeiten ohne Siedeverzug, wobei mindestens an einer Stelle auf der Oberfläche im Innenraum des Gefäßes mindestens ein Fremdmaterial aufgebracht ist. Dir vorliegende Erfindung betrifft weiter ein Verfahren zur Herstellung eines Gefäßes zum Erhitzen von Flüssigkeiten ohne Siedeverzug, wobei mindestens eins der folgenden Materialien Farbe, Glas- und Porzellanfarbe, Leim, Haftstoff, Leim, Kleber oder Polymer mittels Pinseln, Tupfen, Siebdruck, Schiebe- oder Abziehbilder auf die Oberfläche im Innenraum des Gefäßes aufgebracht wird. Die vorliegende Erfindung betrifft schließlich die Verwendung eines Gefäßes zum Erhitzen von Flüssigkeiten ohne Siedeverzug für alle Vorgänge, bei denen Flüssigkeiten, insbesondere Wasser, erwärmt werden, im häuslichen Bereich, insbesondere bei Haushaltsgefäßen, im industriellen Bereich, insbesondere in der chemischen Industrie und im Laborbereich.

## Beschreibung

Die vorliegende Erfindung betrifft ein Gefäß zum Erhitzen von Flüssigkeiten ohne Siedeverzug.

Die üblichen Erhitzungsgeräte in der Industrie, im Laborbereich und insbesondere im häuslichen Bereich haben den Nachteil, dass beim Erhitzen von Flüssigkeiten, insbesondere von Wasser, beim Erwärmen ein unerwarteter Siedeverzug entsteht. Das ist, insbesondere im häuslichen Bereich in der Küche gefährlich und führt häufig zu schweren Verbrennungsverletzungen. Die Hersteller von Haushaltsgeräten sind seit längerem bestrebt, Erhitzungsgeräte, wie Wasserkocher bereitzustellen, die beim Erwärmen keinen Siedeverzug erzeugen.

Die Aufgabe der vorliegenden Erfindung liegt darin, ein Gefäß zum Erhitzen von Flüssigkeiten ohne Siedeverzug und ein wirtschaftliches und umweltschonendes Verfahren zur Herstellung des Gefäßes bereitzustellen.

Die Aufgabe der vorliegenden Erfindung wird durch ein Gefäß zum Erhitzen von Flüssigkeiten ohne Siedeverzug gelöst, wobei mindestens an einer Stelle auf der Oberfläche im Innenraum des Gefäßes mindestens ein Fremdmaterial aufgebracht ist und die Fläche des Fremdmaterials höchstens die gesamte Oberfläche im Innenraum des Gefäßes betragen kann. Der Vorteil des erfindungsgemäßen Gefäßes zum Erhitzen von Flüssigkeiten liegen darin, dass die Gefahrenquelle Siedeverzug verhindert wird. Die Gefäße können beliebige übliche Größen und Formen haben. Die Gefäße sind für beliebige übliche Flüssigkeitsmengen geeignet.

Eine bevorzugte Ausgestaltung der Erfindung ist ein Gefäß, wobei die Stelle an der das Fremdmaterial aufgebracht ist, 0.1 mm bis 50 mm misst. Bei diesen Größen werden gute Ergebnisse erzielt. Es wird eine gute Blasenbildung beobachtet.

Eine bevorzugte Ausgestaltung der Erfindung ist ein Gefäß, wobei das aufgebrachte Fremdmaterial mindestens eins der folgenden Materialien, wie Farbe, Glasfarbe, Porzellanfarbe, Haftstoff, Leim, Kleber, Textilien, Gewebe, anorganische, organische Polymere, oder ein Gemisch davon ist. Mit diesen Materialien werden sehr gute Ergebnisse erzielt.

Eine bevorzugte Ausgestaltung der Erfindung ist ein Gefäß, wobei das Fremdmaterial mittels Pinseln, Tupfen, Drucken, Kleben, Verschmelzen, Schiebeoder Abziehbilder aufgebracht wird. Mit diesen Verfahren werden sehr gute Ergebnisse erzielt.

Eine bevorzugte Ausgestaltung der Erfindung ist ein Gefäß, wobei die Oberfläche im Innenraum des Gefäßes mindestens eins der folgenden Bestandteile, wie Glas, insbesondere Borosilikatglas, Glaskeramik, Keramik, Email, Metall, Metalllegierung, anorganisches und organisches Polymer oder Gemische davon enthält. Erfindungsgemäß werden handelsübliche Fremdmaterialein kostengünstig und umweltfreundlich verwendet.

Erfindungsgemäß ist ein Verfahren zur Herstellung eines Gefäßes zum Erhitzen von Flüssigkeiten ohne Siedeverzug vorgesehen, wobei mindestens eins der folgenden Materialien Farbe, Glas- und Porzellanfarbe, Leim, Haftstoff, Leim, Kleber oder Polymer mittels Pinseln, Tupfen, Siebdruck, Schiebe- oder Abziehbilder auf die Oberfläche im Innenraum des Gefäßes aufgebracht wird. Das Fremdmaterial wird somit erfindungsgemäß kostengünstig und umweltfreundlich aufgebracht.

Erfindungsgemäß ist die Verwendung eines Gefäßes zum Erhitzen von Flüssigkeiten ohne Siedeverzug für alle Vorgänge vorgesehen, bei denen Flüssigkeiten, insbesondere Wasser, zum erwärmt werden.

Erfindungsgemäß ist die Verwendung eines Gefäßes zum Erhitzen von Flüssigkeiten ohne Siedeverzug im häuslichen Bereich, insbesondere bei Haushaltsgefäßen, im industriellen Bereich, insbesondere in der chemischen Industrie, im Medizinbereich und im Laborbereich vorgesehen.

Erfindungsgemäß ist die Verwendung eines Gefäßes zum Erhitzen von Flüssigkeiten ohne Siedeverzug für alle Wärmequellen, insbesondere Brenner, Elektroherde, Gasherde, Mikrowellengeräte, keramische und glaskeramische Kochplatten vorgesehen. Eine gute Eignung wurde für keramische Kochfelder, wie Ceran® Kochfelder festgestellt.

Die Erfindung wird anhand von Figuren und Beispielen näher erläutert.

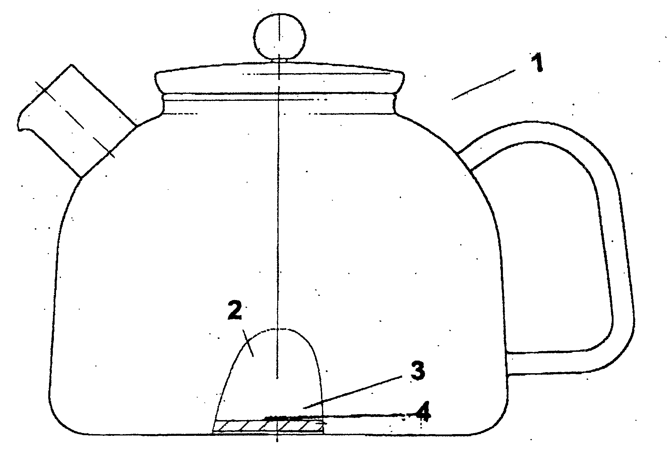

Figur 1 zeigt einen Wasserkocher (1) mit einem Ausschnitt (2) im Bodenbereich (3) wo ein Farbbild (4) zu sehen ist.

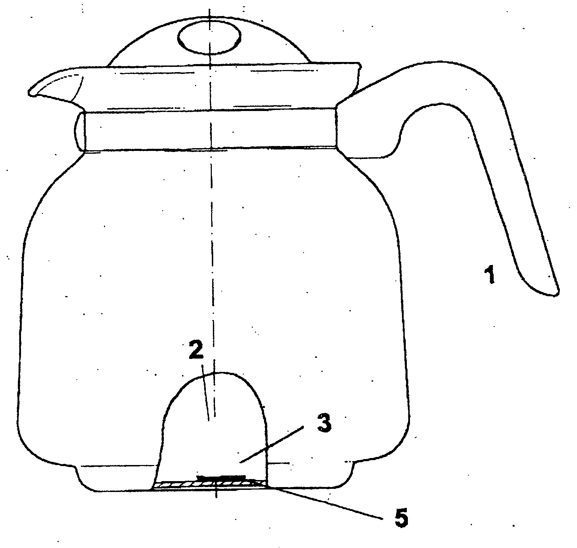

Figur 2 zeigt einen Wasserkocher (1) mit einem Ausschnitt (2) im Bodenbereich (3) wo ein Schiebebild (5) zu sehen ist.

### Beispiele

Zu der verwendeten Farbserie H 52 der Firma Heräus werden folgende allgemeine Angaben gemacht. Die Farben der Serie H 52 sind untereinander mischbar. Die Paste soll mittels eines Dreiwalzwerkes homogenisiert werden. Dies ist besonders wichtig, da matte oder raue Farboberflächen zumeist auf ungenügende Farbdispergierung zurückzuführen sind. Die Homogenisierung mittels eines Dreiwalzwerkes ist wichtig für Direktsiebdruck und Abziehbildherstellung. Beim Siebdruck und bei Abziehbildem wird ein Mischungsverhältnis von 100 Gewichtsteilen Farbpulver zu 55 bis 60 Gewichtsteilen Siebdrucköl verwendet. Der dekorierte Gegenstand ist, nachdem das Abziehbild etwa 4 bis 5 Stunden getrocknet ist, bei langsam ansteigender Temperatur einzubrennen, wobei besonders in der ersten Einbrennphase bis etwa 350 °C bei einer guten Entlüftung eine entscheidende Bedeutung für die Qualität des fertigen Dekors zukommt.

### Beispiel 1

Eine Glasfarbe (Heräus, Serie H 52) wurde mit einem Pinsel punktuell auf die Bodenmitte eines Glasgefäßes aufgebracht. Der Punkt hatte einen Durchmesser von 5 mm. Die Farbe wurde vorschriftgemäß eingebrannt. Beim Erwärmen des Wassers bildeten sich deutlich sichtbare Blasen. Ein Siedeverzug hat nicht stattgefunden.

### Beispiel 2

Eine Glasfarbe wurde als Schiebebild flächig auf die Bodenmitte eines Glasgefäßes aufgebracht. Die Fläche des Schiebebilds hatte eine Größe von 10 mm * 300 mm Die Farbe wurde vorschriftgemäß eingebrannt. Bei Erwärmen des Wassers bildeten sich deutlich sichtbare Blasen. Ein Siedeverzug hat nicht stattgefunden.

Die Vorteile der vorliegenden Erfindung wurden anhand der vorstehenden Beispiele gezeigt.

## Patentansprüche

1. Ein Gefäß zum Erhitzen von Flüssigkeiten ohne Siedeverzug, wobei mindestens an einer Stelle auf der Oberfläche im Innenraum des Gefäßes mindestens ein Fremdmaterial aufgebracht ist und die Fläche des Fremdmaterials höchstens die gesamte Oberfläche im Innenraum des Gefäßes betragen kann.

2. Das Gefäß nach Anspruch 1, wobei die Stelle an der das Fremdmaterial aufgebracht ist, 0.1 mm bis 50 mm misst.

3. Das Gefäß nach Anspruch 1 oder 2, wobei das Fremdmaterial auf dem Boden aufgebracht ist.

4. Das Gefäß nach einem oder mehreren der Ansprüche 1 bis 3, wobei das aufgebrachte Fremdmaterial mindestens eine der folgenden Materialien, wie Farbe, Glasfarbe, Porzellanfarbe, Haftstoff, Leim, Kleber, Textilien, Gewebe, anorganische, organische Polymere, oder ein Gemisch davon ist.

5. Das Gefäß nach einem oder mehreren der Ansprüche 1 bis 4, wobei das Fremdmaterial mittels Pinseln, Tupfen, Drucken, Kleben, Verschmelzen, Schiebe- oder Abziehbilder aufgebracht wird.

6. Das Gefäß nach einem oder mehreren der Ansprüche 1 bis 5, wobei die Oberfläche im Innenraum des Gefäßes mindestens eins der folgenden Bestandteile, wie Glas, insbesondere Borosilikatglas, Glaskeramik, Keramik, Porzellan, Emaille, Metall, Metalllegierung, anorganische, organische Polymere oder Gemische davon enthält.

7. Verfahren zur Herstellung eines Gefäßes zum Erhitzen von Flüssigkeiten ohne Siedeverzug nach einem oder mehreren der Ansprüche 1 bis 6, wobei mindestens eins der folgenden Materialien Farbe, Glasfarbe, Porzellanfarbe, Leim, Haftstoff, Kleber, Textilien, Gewebe anorganische, organische Polymere oder Gemische davon mittels Pinseln, Tupfen, Drucken, Kleben, Verschmelzen, Schiebe- oder Abziehbilder auf die Oberfläche im Innenraum des Gefäßes aufgebracht wird.

8. Verwendung eines Gefäßes zum Erhitzen von Flüssigkeiten ohne Siedeverzug nach einem oder mehreren der Ansprüche 1 bis 6 für alle Vorgänge, bei denen Flüssigkeiten, insbesondere Wasser, erwärmt werden.

9. Verwendung eines Gefäßes zum Erhitzen von Flüssigkeiten ohne Siedeverzug nach einem oder mehreren der Ansprüche 1 bis 6 im häuslichen Bereich, insbesondere bei Haushaltsgefäßen, im industriellen Bereich, insbesondere in der chemischen Industrie, im Medizinbereich und im Laborbereich.

10. Verwendung eines Gefäßes zum Erhitzen von Flüssigkeiten ohne Siedeverzug nach einem oder mehreren der Ansprüche 1 bis 6 für alle Wärmequellen, insbesondere Brenner, Elektroherde, Gasherde, Mikrowellengeräte und keramische und glaskeramische Kochplatten.
